# EUROPEAN PATENT APPLICATION

(11) **EP 0 960 606 A2**
(43) Date of publication of application: **01.12.1999**
(21) Application number: 99201707.9
(22) Date of filing: 28.05.1999
(51) Int. Cl.: A61D 3/00, A01K 1/06

(54) **Method for bringing an animal, particularly the head of a cow, in a stable or steady position, as well as the apparatus for stabilizing and raising or lifting the head**

(30) Priority: 28.05.1998 NL 1009279
(71) Applicant: Gaasbeek, Jan Willem, 6666 LD Heteren (NL)
(72) Inventor: Gaasbeek, Jan Willem, 6666 LD Heteren (NL)

(57) **Abstract**

Method for bringing an animal in a stable or steady position, by first catching the animal by means of a catching mechanism by clamping close to the neck, in such a way that by co-operation of the clamp devices with the animals head (40) and shoulders respectivicly forward and backward movements by the animal (41) are prevented. Further the head of the animal is forced upwards by means of an apparatus for lifting (10) in such a way that through co-operation of support devices (15) with the underside of the animals (41) head (40) up- and downward movements of the head (40) are mainly prevented. The invention also relates to an apparatus for lifting (10).

## Description

The present invention concerns a method for bringing an animal in a stable or steady position, as well as the apparatus for lifting the head.

In the cattle-breeding it is increasingly wished to treat an animal at its head. As an example we mention giving the animal food additives or medicines in the mouth of the animal. A second example is mounting indicators, such as an earmark or a chip to the head of the animal. Another example is mounting a transmitter and/or transponder to the head of the animal in order to collect information concerning the status of an animal with blank contact.

Before such a treatment can be executed, it is necessary to catch the animal and put it in a stable position so that it can undergo the treatment to its head.

In the usual way the animal is first caught by means of a catching mechanism by clamping the animal close to the neck in such a way, that through co-operation of clamp devices and the head and shoulders of the animal respectivicly, forward and backward movements of the animal is prevented. Often in practice a self-closing manger rack is used as a catching mechanism because through this an animal can be caught and clamped in a simple way. After the animal is clamped by means of the catching mechanism, the head of the animal is lifted upwards by a person and held in such a position that the head of the animal can undergo a treatment.

However, in practice the animal is often unwilling and tries to resist to the treatment. Not only the chance is big that because of this the treatment is disturbed, with all the adverse effects and risks for the animal, but there is also a big chance that the animal will become stressed. This has injurious effects to the health condition of the animal.

Especially if the animal to be treated is cattle, in practice a lot of problems occur. Usually, after the cattle is caught and clenched by means of the catching mechanism, the animal is grabbed in the nose by a persons fingers and the head pulled upwards. Not only is this unpleasant for the animal, it also demands a lot of strength of the attending person. Especially an unwilling cow will try to free itself with great strength. In practice this often leads to interruption of the treatment. Besides that the animal becomes stressed. If the cattle is a milking cow, its milk production can be disturbed. Besides, there is a big chance that, due to the great strength needed, back injury is caused to the treating person.

The invention has the purpose to create a simple method to bring the animal in a stable position, by which the above mentioned disadvantages are being avoided. The invention provides for that purpose a method to bring the animal in a stable position, by which the animal by means of a catching mechanism by clamping close to the neck is clamped in such a way that by co-operation of the clamp devices with the animals head and shoulders respectivicly, cannot move forward or backwards, and by which further the head of the animal is forced upwards by means of an apparatus for lifting in such a way that through co-operation of support devices with the underside of the animals head, up- and downward movements of the head are mainly prevented. By using an apparatus for lifting with support devices that co-operate with the underside of the animals head, it is attained that it needs much less strength for a person to bring the animals head in a stable position so that treatment is accessible. Moreover it is achieved that the animal is less stressed and will try to resist less to the treatment.

In accordance of a further construction of the method of the invention the support devices are, after the animals head is forced upwards, fixed in vertical position. Through this the stability of the position in which the animals head is treated is enlarged. Moreover it is achieved that the treating person keeps two hands free to treat the animals head.

In accordance with another construction of the method of the invention the animals head is forced upwards by a swivelling movement of the support devices with regard to a mainly horizontal swivel axle. This gives the advantage that while lifted, the animals head follows a natural movement and makes it possible to use a simple apparatus for lifting.

In a further construction according the invention the support devices also grip the sides of the animals head in such a way that sideward movements of the head with regard to the support devices are prevented. Through this the stability of the animals head in treatment position is further enlarged.

The invention also relates to an apparatus for lifting for application with a catching mechanism, such as a manger rack, in order to catch the animal by means of clamping nearby the animals neck. An apparatus for lifting according the invention is applied with support devices for co-operation with the underside of the animals head and with coupling devices with which the apparatus for lifting and catching mechanism can be coupled, in such a way that during use the support devices with regard to the catching mechanism are adjustable in height and that by means of the support devices the animals head which is clamped in the catching mechanism can be forced upwards. With such an apparatus for lifting the animals head can be lifted in an elegant way while the animal stays calm. Further the strength needed of the treating person can be decreased.

In a preferred construction the coupling devices are constructed in such a way that the apparatus for lifting is detachable from the catching mechanism. Through this it is achieved that by means of one apparatus for lifting several animals that are clamped in the catching mechanism can be treated the same time.

Further developments of preferred constructions of the method to bring an animal in a stable position and the apparatus for lifting according the invention are described in the adherent claims.

The invention will now be described by way of example and with reference to the accompanying drawings in which:
- Figure 1:: a front view illustrating a self-closing manger rack;
- Figure 2:: a front view illustrating an apparatus for lifting in basic position; and
- Figure 3: : a perspective view of the apparatus for lifting in upper position.

Remarked is that the figures are only schematically reproductions of the preferred construction of the invention and that within the framework of the claims many ways of constructions are possible. The figures show equal or corresponding parts with corresponding reference-numbers.

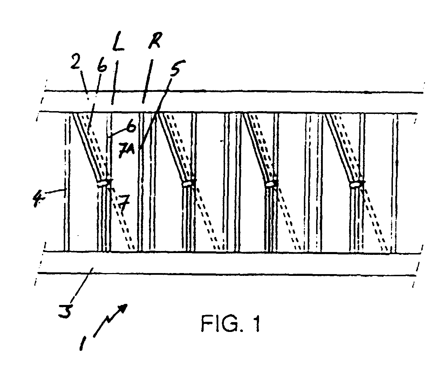

Figure 1 shows a self-closing manger rack 1 for cattle, that is used in the method for treating an animal according the invention. The manger rack 1 comprises in used condition a mainly horizontal top spar 2 and a parallel to the top spar 2 stretched bottom spar 3. The top spar 2 and the bottom spar 3 are connected by means of a quantity of fixed racks 4, 5.

Between the top spar 2 and the bottom spar 3 also a quantity of swivelling catch racks 6 are connected between the open position and catching position, of which each, together with a fixed rack 4 form a grate opening 7. The swivelling catch rack 6 is shown in figure 1 in open position by a dotted line and in catching position by a produced line. During use of the manger rack 1 food is placed on the floor at the avert side of the manger rack 1 of the animal. The animal shall reach its head through the large hole 7a of the grate opening 7 and thereupon move its head downwards in order to reach the food. By this the animal pushes with its neck the swivelling catch rack 6 from opened position into catching position. In catching position the swivelling catch rack is automatically locked by means of non-exposed locking devices. The swivelling rack 6 and the fixed rack 5 co-operate as clamp devices and clamp the animal nearby the neck in such a way that by co-operation of the fixed rack 5 and the swivelling catching rack 6 with the animals head and shoulders respectivicly are prevented from forward and backward movements. Remarked is that due to the length of the animals neck, the clamped animal mostly keeps a small movement freedom in forward and/or backward directions.

A manger rack 1 is normally used for cow-shed animals in order to avoid that the animals eat each others food. Normally the manger rack 1 consists out of a large number of grate openings 7 on a row, as shown in figure 1, of which the catch racks 6 can be unlocked separately or at the same time as desired. Naturally, also only one grate opening can be present. The working and construction of such manger racks is generally known and shall therefore not be described further.

Remarked is that an animal can also be clamped by means of another type of catching mechanism through clamping near the neck in such a way that through co-operation of clamping devices with the animals head and shoulders respectivicly forward and backward movements of the animal is prevented. For example a catching mechanism can be used with manual operated, sliding catch rack and/or a sliding top spar. The privilege of using a catching mechanism is that the animal can be clamped without needing a halter.

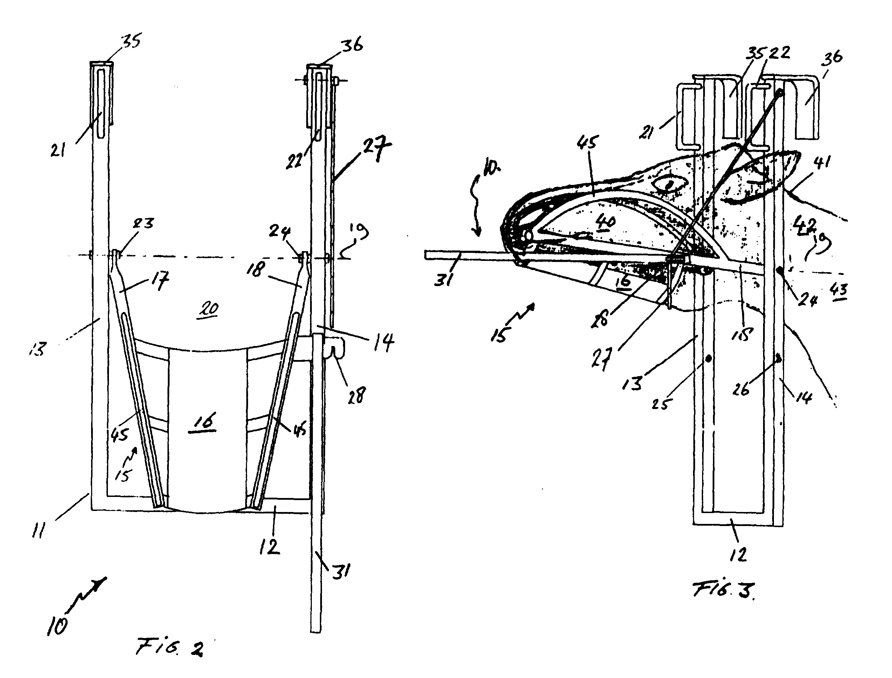

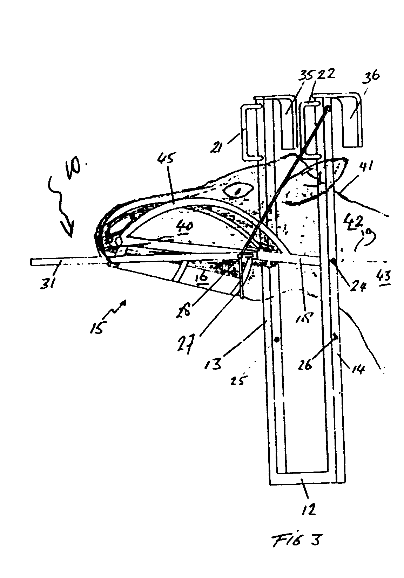

Figures 2 and 3 show an apparatus for lifting 10 according the invention for use with a catching mechanism 1 as shown in figure 1. The apparatus for lifting 10 consist a mainly U-formed frame 11 that consist a body 12 and two legs 13, 14. The apparatus for lifting 10 further consist supporting devices 15 which are connected to the legs 13, 14 of the U-formed frame and swivel with regard to the mainly parallel swivel axle 19 on the body 12 of the U-formed frame 11. In front view of the U-formed frame 11, the support devices stretch out between the legs 13, 14 of the frame 11. The distance between the swivel axle 19 and the body 12 can be adjusted by means of disconnecting the bolts 23, 24 which connect the swivelling arms 17, 18 to the legs 13, 14 of the U-formed frame 11, and to connect the swivelling arms 17, 18 of the U-formed frame 11 at the place of the lower situated holes 25, 26 to the legs 13, 14.

The support devices 15 have a cup-shaped part 16 that can grip to the underside and sides of the animals 41 head 40. For strengthening the cup-shape the sides of the cup-shaped part 16 are supplied with supporting brackets 45. The support devices 15 are connected to the legs 13, 14 of the U-formed frame 11 by means of two swivel arms 17, 18. Nearby the swivel axle 19 a recess 20 is applied between the swivel arms 17, 18 in order to facilitate the swivelling along the animals 41 neck 42. If required the support devices 15 can be demounted as described above and be replaced by for example support devices 15 with a smaller cup-shaped part 16 which would be more suitable for clamping the underside of a smaller or younger animal.

The apparatus for lifting 10 is further supplied with coupling devices with which the apparatus for lifting 10 can be connected with a catching mechanism, such as a manger rack 1. In this example the coupling devices are constructed as two hooks 35, 36 for co-operation with the mainly horizontal bar 2 of the manger rack 1 and are each connected close to the free end of a leg 13, 14 of the U-formed frame 11. The U-formed frame 11 further has two hand grips 21, 22 that are each connected close to the free end of a leg 13, 14 of the U-formed frame 11. Also the apparatus for lifting 10 is supplied with a lever 31 for swivelling the support devices 15 with regard to the swivel axle 19.

The apparatus for lifting 10 is further supplied with fixing devices for, during use, fixing support devices 15 in vertical direction. In this example the fixing devices consist out of a chain 27 that is connected to the leg 14 of the U-formed frame 11 and a flange with a groove 28 that is connected nearby the cup-shaped part 16 on the side of the support devices 15.

The method for treating an animal goes as follows. After the animal 41 has been clamped by means of the manger rack 1 the apparatus for lifting 10 is coupled to the manger rack 1. This is executed by gripping the apparatus for lifting 10 by means of the hand grips 21, 22 and by means of connecting the hooks 35, 36 to the top spar 2 of the manger rack 1 in such a way that the leg 13 of the U-formed frame 11 corresponds with the swivelling rack 6 and that the leg 14 of the U-formed frame corresponds with the fixed rack 5 of the manger rack 1. In coupled position, the hooks 35, 36 are situated close to the positions marked with letters L and R in figure 1. In practice the U-formed frame 11 with the free leg ends 13, 14 pointed forward is moved upwards from below so that the animals 41 head 40 is placed between the legs of the frame 11.

After the apparatus for lifting 10 is coupled with the manger rack 1, the swivel axle 19 stretches itself mainly parallel with the top spar 2 of the manger rack 1, and the swivel axle will be positioned at the animals shoulder height and stretches mainly transverse with regard to the animals 41 longitudinal direction.

During use the support devices 15 are adjusted in height, with regard to the swivel axle 19 by means of swinging them round from the in figure 2 shown starting position to the in figure 3 shown upper moved position. By co-operation of the cup-shaped part 16 of the support devices 15 with the under side of the animals 41 head 40, the animals 41 head 40 is moved upwards. When the animals 41 head 40 is sufficiently accessible for treatment, the support devices 15 are fastened by inserting a curb of the chain 27 in the groove 28 (figure 3). Through this downward movements of the head 40 are prevented by means of the support devices 15, while upward movements of the head 40 is prevented, either because the animals 41 head 40 with regard to the neck 42 cannot move further upwards, or because the neck 42 of the animals 41 head 40 co-operates at the upper side with the top spar 2 of the manger rack 1. The cup-shaped part 16 of the support devices 15 also prevent sideward movements of the animals 41 head 40, so that the animal 41 is brought in a steady position in which the animals 41 head 40 is sufficiently accessible for treatment. In practice the treating person has two hands free to give the animal 41 for example an injection with propyleneglycol in the mouth or for example attach an earmark to the animals 41 ear.

Because the swivel movement corresponds with the natural movement of the animals 41 head 40 with regard to its neck 42 and/or shoulders 43, the strength needed for forcing the head upwards is relatively small. By combination of the swivel movement with the lever 31 the needed strength can be decreased even more. Further is has shown in practice that the animal 41 often co-operates and moves its head 40 slightly upwards out of itself as soon as the support devices 15 touch the underside of its head 40. By using the apparatus for lifting 10 the chance is therefore bigger that, at least until the moment of treatment, the animal 41 is relaxed.

After completion of the treatment the chain 28 is pulled out of the groove 28 and the support devices 15 are being swivelled downwards. Further the apparatus for lifting 10 can be decoupled from the manger rack 1 and attached nearby the next grate opening 7 to treat the next animal 41.

Remarked is that the invention is not restricted to the herein described preferred construction of the invention. Many variations are possible. As an example it is also possible that the apparatus for lifting is not de-mountable coupled to the catching mechanism. The apparatus for lifting can for example also be swivelling with regard to a vertical swivelling axle, for example in order to avoid that, while using the not de-mountable apparatus for lifting, the grate opening of the manger rack is blocked.

Further it is possible that the support devices execute a straight lined vertical movement instead of a swivel movement in vertical direction. Besides it is possible that parts of the apparatus for lifting are constructed adjustable, for example a U-shaped frame of which the length of the body and/or the legs are adjustable. Further it is possible to vary the height of the swivel axle during use.

In addition a larger quantity of coupling devices or different kinds of coupling devices can be constructed, such as bolts and nuts or clamping brackets.

Further it is possible to construct the frame differently, for example as a framing only, or even left out. Especially a construction variant is possible in which the swivel arms of the support devices are directly mounted, meaning without a frame, to the catching mechanism, as an example with clamps that co-operate with for example the vertical, fixed bars of the manger rack.

Beside this it is possible that different kinds of clamping devices are used such as a belt and/or a pin.

These and many other variations are considered to be within the scope of the invention as put into words in the following claims.

## Claims

1. Method for bringing an animal in a stable or steady position, **characterised in that** the animal by means of a catching mechanism by clamping close to the neck is clamped in such a way that by co-operation of the clamp devices with the animals head (40) and shoulders respectivicly forward and backward movements by the animal (41) are prevented, by which further the head of the animal is forced upwards by means of an apparatus for lifting (10) in such a way that through co-operation of support devices (15) with the underside of the animals (41) head (40) up- and downward movements of the head (40) are mainly prevented.

2. Method according claim number 1, **characterised in that** the support devices (15) are fixed in vertical direction after the animals (41) head (40) is forced upwards.

3. Method according claim numbers 1 or 2, **characterised in that** the animals (41) head (40) is forced upwards by means of swivelling the support devices (15) with regard to a mainly horizontal swivelling axle (19).

4. Method according one of the before mentioned claims, **characterised in that** the support devices (15) also grip the sides of the animals (41) head (40), in such a way that also sideward movement of the head (40) with regard to the support devices (15) are prevented.

5. Apparatus for lifting (10) for use with a catching mechanism for catching the animal (41) by means of clamping nearby the neck such as a manger rack (1), **characterised in that** the apparatus for lifting (10) is provided with support devices (15) for co-operation with the underside of the animals (41) head (40) and of coupling devices (35, 36) with which the apparatus for lifting (10) can be coupled with the catching mechanism (1), in such a way that the support devices (15) are adjustable in height with regard to the catching mechanism (1) during use and that by means of the support devices the animals (41) head (40) which is clamped by the catching mechanism, can be forced upwards.

6. Apparatus for lifting (10) according claim number 5, **characterised in that** the coupling devices are in such a way that the apparatus for lifting (15) can be de-mounted from the catching mechanism.

7. Apparatus for lifting (10) according claim numbers 5 or 6, **characterised in that** the invention consists fixing devices for fastening the support devices (15) in a vertical position during use.

8. Apparatus for lifting (10) according one of the claim numbers 5-7, **characterised in that** the support devices (15) are mainly cup-shaped, in such a way that the support devices (15) can grip the underside and sides of the animals (41) head (40), in order to prevent movements of the head (40) with regard to the support devices (15).

9. Apparatus for lifting (10) according one of the claim numbers 5-8, **characterised in that** during use the support devices (15) can swivel with regard to a mainly horizontal swivel axle (19) while connected to a catching mechanism (11) and/or a frame.

10. Apparatus for lifting (10) according claim number 9, **characterised in that** the support devices (15) are supplied with a lever for swivelling the support devices (15) with regard to the swivel axle (19).

11. Apparatus for lifting (10) according claim number 9 or 10, **characterised in that** the fixing devices consist out of a chain or belt (27) that co-operates with the support devices (15) on the one hand and the frame (11) and/or catching mechanism on the other hand.

12. Apparatus for lifting (10) according one of the claim numbers 9-11, **characterised in that** the apparatus for lifting (10) consists out of a mainly U-formed frame (11) that consists a body (12) and two legs (13, 14) and of which the support devices (15), connected to the legs of the U-formed frame, are swivelling with regard to the mainly parallel swivel axle (19) on the body (12) of the U-formed frame (11), in such a way that, in front view, the support devices (15) stretch out between the legs of the U-formed frame (11).

13. Apparatus for lifting (10) according claim number 12, **characterised in that** the distance between the swivel axle (19) and the body (12) of the frame (11) is adjustable.

14. Apparatus for lifting (10) according claim number 12 or 13, **characterised in that** the support devices (15) are connected to the legs of the U-formed frame (11) by means of two swivel arms (13, 14) and by which close to the swivel axle (19) a recess is applied between the swivel arms.

15. Apparatus for lifting (10) according one of the claim numbers 12-14, **characterised in that** the coupling devices consist out of at least two hooks (35, 36) for co-operation with a mainly horizontal bar of the manger rack, and are each connected close to the free end of a leg of the U-formed frame (11).

16. Apparatus for lifting (10) according one of the claim numbers 12-15, **characterised in that** the frame (11) is supplied with two hand grips (21, 22) that are each connected close to the free end of a leg of the U-formed frame (11).

17. Manger rack (1) supplied with an apparatus for lifting (10) according one of the claim numbers 5-16.
